# EUROPÄISCHE PATENTSCHRIFT

(11) **EP 1 188 941 B1**
(45) Veröffentlichungstag und Bekanntmachung des Hinweises auf die Patenterteilung: **11.05.2005**
(21) Anmeldenummer: 01105124.0
(22) Anmeldetag: 02.03.2001
(51) Int. Cl.: F16C 29/04

(54) **Führungseinrichtung**
Guiding device
Dispositif de guidage

(30) Priorität: 14.09.2000 DE 20015886 U
(43) Veröffentlichungstag der Anmeldung: 20.03.2002
(73) Patentinhaber: FESTO AG & Co, 73734 Esslingen (DE)
(72) Erfinder: Angué, Eric, 70469 Stuttgart (DE)
(74) Vertreter: Abel, Martin, Dipl.-Ing.

(56) Entgegenhaltungen:
- DE-A- 4 028 385
- DE-U- 9 103 077
- DE-U- 29 706 226
- US-A- 5 106 207

## Beschreibung

Die Erfindung betrifft eine Führungseinrichtung, mit mindestens einem Führungskörper, der mindestens eine Laufbahn für relativ zum Führungskörper bewegbare Lagermittel definierende Laufbahnmittel aufweist und an dem mindestens ein in die Bewegungsbahn der Lagermittel ragender Begrenzungsanschlag angeordnet ist.

Die DE 40 28 385 A1 offenbart eine derartige Führungseinrichtung in Form einer Wälz-Linearführung bestehend aus zwei Schienen und mehreren Wälzkörpern, die in einem Käfig gefasst sind. Zur Verhinderung der Abwanderung des Käfigs sind Begrenzungsanschläge in Form von U- oder M-förmigen Klammern vorgesehen, die in quer zur Bewegungsrichtung des Käfigs ausgerichtet Nuten in die Schienen hineingesteckt werden können. Dabei ragt ein Teil der Klammern in die Bewegungsbahn des Käfigs, so dass dieser daran anschlagen kann. Falls die vom Käfig einwirkende Aufprallenergie zu groß ist, kann sich die Klammer in Bewegungsrichtung des Käfigs verschieben und an einer in Richtung der Lagermittel weisenden Nutflanke anschlagen.

Führungseinrichtungen kommen beispielsweise im Zusammenhang mit elektrisch und/oder durch Fluidkraft aktivierbaren Antriebsvorrichtungen zum Einsatz, wie sie beispielsweise aus der EP 0 683 010 A1 hervorgehen. Solche Antriebsvorrichtungen können über ein Grundgehäuse und einen daran axial verschiebbar geführten Schlitten verfügen, wobei zwischen diesen beiden Teilen eine Führungseinrichtung der eingangs genannten Art vorgesehen ist. Im bekannten Fall umfasst die Führungseinrichtung mehrere schienenartige Führungskörper, die teils am Grundgehäuse und teils am Schlitten fixiert sind und die einander zugewandte Laufbahnen für zwischengefügte Wälzelemente aufweisen. Die Wälzelemente sind Bestandteile von Lagermitteln, die eine leichtgängige Verschiebeführung gewährleisten und in der Lage sind, Querkräfte aufzunehmen. Im Betrieb des Antriebes werden die Führungskörper relativ zueinander verlagert, wobei die Wälzelemente an den Laufbahnen entlangwandern. Um zu verhindern, dass die Lagermittel stirnseitig aus den Führungskörpern herausfallen, und eventuell auch, um eine Hubbegrenzung zwischen den bewegten Teilen zu erhalten, sind Begrenzungsanschläge vorhanden, die in die Bewegungsbahn der Lagermittel ragen und deren Bewegungsmöglichkeit begrenzen. Die Begrenzungsanschläge bestehen aus Platten, die mittels Befestigungsschrauben stirnseitig an die schienenartigen Führungskörper angeschraubt sind.

Nachteilig bei einer derartigen Führungseinrichtung ist die Notwendigkeit zur Einbringung von Gewindebohrungen für die Befestigungsschrauben. Die hierfür erforderlichen Arbeitsvorgänge sind relativ aufwendig. Häufig ist auch der für die Gewindebohrungen zur Verfügung stehende Platz sehr knapp bemessen, so dass die erzielbare Gewindefestigkeit nicht sehr hoch ist, was bei einem harten Aufprall der Lagermittel zu einem Ausreißen der Gewinde führen kann.

Zur Behebung dieser Problematik hat man in dem deutschen Gebrauchsmuster 29706226.3 bereits vorgeschlagen, die Begrenzungsanschläge nicht direkt am jeweiligen Führungskörper zu befestigen, sondern auf L-förmige Begrenzungsanschläge überzugehen, die man zwischen dem Führungskörper und dem diesen tragenden Körper festspannt. Vor allem bei kleinen Baugrößen haben sich hier jedoch die erforderlichen Montagearbeiten als etwas umständlich erwiesen.

Es ist daher die Aufgabe der vorliegenden Erfindung, eine Führungseinrichtung der eingangs genannten Art zu schaffen, die eine einfache und sichere Fixierung eines Begrenzungsanschlages ermöglicht.

Zur Lösung dieser Aufgabe ist vorgesehen, dass der Begrenzungsanschlag in einen sich in der Bewegungsbahn der Lagermittel quer zur Längsrichtung der Bewegungsbahn der Lagermittel erstreckenden Querschlitz des Führungskörpers eintaucht, wobei die in Richtung der Lagermittel weisende Schlitzflanke als Abstützfläche für den in die Bewegungsbahn der Lagermittel ragenden Abschnitt des Begrenzungsanschlags dient.

Auf diese Weise kann der Begrenzungsanschlag unmittelbar am zugeordneten Führungskörper verankert werden, ohne auf Schraubverbindungen zurückgreifen zu müssen. Der Begrenzungsanschlag wird in einen Querschlitz des Führungskörpers eingesetzt, wobei der Führungskörper selbst, durch die in Richtung der Lagermittel weisende Schlitzflanke, die Abstützung des Begrenzungsanschlages gegen die von den aufprallenden Lagermitteln ausgeübten Kräfte aufnimmt. Begrenzungsanschlag und Querschlitz sind dabei so aufeinander abgestimmt, dass der Begrenzungsanschlag wie gewünscht in die Bewegungsbahn der Lagermittel ragt.

Den an einem Führungskörper vorgesehenen Laufbahnmitteln können mehrere, insbesondere zwei in Längsrichtung der Bewegungsbahn der Lagermittel beabstandete Begrenzungsanschläge zugeordnet sein, um die gewünschte Wegbegrenzung bei beiden Bewegungsrichtungen zu erzielen.

Die Führungseinrichtung kann einen oder mehrere Führungskörper aufweisen, wobei mehrere Führungskörper so angeordnet sein können, dass sich einander paarweise zugeordnete Laufbahnmittel ergeben, zwischen denen Lagermittel angeordnet sind, die eine gegenseitige Führung und Querabstützung der Führungskörper bewirken.

Die Führungseinrichtung kann überall dort eingesetzt werden, wo zwei Komponenten eine Relativbewegung ausführen und in ihrer Relativbewegung geführt werden sollen. Einsatzmöglichkeiten ergeben sich beispielsweise auf dem Sektor der Bearbeitungsmaschinen bzw. zur Führung von Maschinenschlitten. Ein weiterer bevorzugter Einsatzbereich ist derjenige von elektrischen oder fluidischen Antriebsvorrichtungen, beispielsweise Schlitten-Antriebsvorrichtungen, bei denen ein Grundkörper und ein diesbezüglich bewegungsangetriebener Schlitten geführt werden sollen.

Weitere vorteilhafte Maßnahmen ergeben sich aus den Unteransprüchen.

Zweckmäßigerweise ist der Querschlitz derart ausgerichtet, dass seine Schlitzebene rechtwinkelig zur Längsrichtung der Bewegungsbahn der Lagermittel verläuft.

Um besonders kompakte Abmessungen zu erzielen, sind der Begrenzungsanschlag und der zugehörige Querschlitz vorzugsweise derart aufeinander abgestimmt, dass der Begrenzungsanschlag mit Ausnahme des der Bewegungsbahn zugeordneten Abschnittes im wesentlichen vollständig innerhalb des Querschlitzes zu liegen kommt.

Obgleich die Führungseinrichtung auch im Zusammenhang mit nicht-linearen Bewegungsbahnen verwendbar ist, erweist sie sich besonders vorteilhaft bei einer Ausgestaltung als Linearführungseinrichtung, bei der die Laufbahnmittel eine sich linear erstreckende Bewegungsbahn für die Lagermittel definieren.

Der Begrenzungsanschlag wird zweckmäßigerweise durch direktes Zusammenwirken mit dem Führungskörper an Ort und Stelle im Querschlitz gehalten. Hierbei bietet sich eine kraft-, form- und/oder stoffschlüssige Verbindung an, beispielsweise durch Verklemmen, Verrasten und/oder Verkleben. Der Begrehzungsanschlag kann beispielsweise federnd ausgebildet sein, so dass er im Querschlitz verspannt wird.

Man kann auch vorsehen, den Querschlitz so zu platzieren, dass er von einem am Führungskörper nachträglich zu befestigenden weiteren Körper überdeckt wird, um auf diese Weise eine Verliersicherung für den eingesetzten Begrenzungsanschlag zu realisieren.

Bei einer bevorzugten Ausgestaltung ist der Begrenzungsanschlag bügelartig gestaltet, wobei seine Bügelschenkel in jeweils eine von Laufbahnmitteln definierte Bewegungsbahn für Lagermittel ragen. Der Begrenzungsanschlag kann hier insbesondere U-förmig gestaltet sein. In Verbindung mit einer derartigen Ausführungsform empfiehlt sich eine ebenfalls etwa U-förmig gestaltete Form des Querschlitzes.

Der Führungskörper kann im Bereich des Querschlitzes einen die Schlitzbreite überbrückenden Zentralabschnitt aufweisen, der die Schlitztiefe und gleichzeitig die Einstecktiefe des Begrenzungsanschlages begrenzt. Der Querschlitz kann sich hierbei um den Zentralabschnitt herum erstrecken.

Nachfolgend wird die Erfindung anhand der beiliegenden Zeichnung näher erläutert. In dieser zeigen:

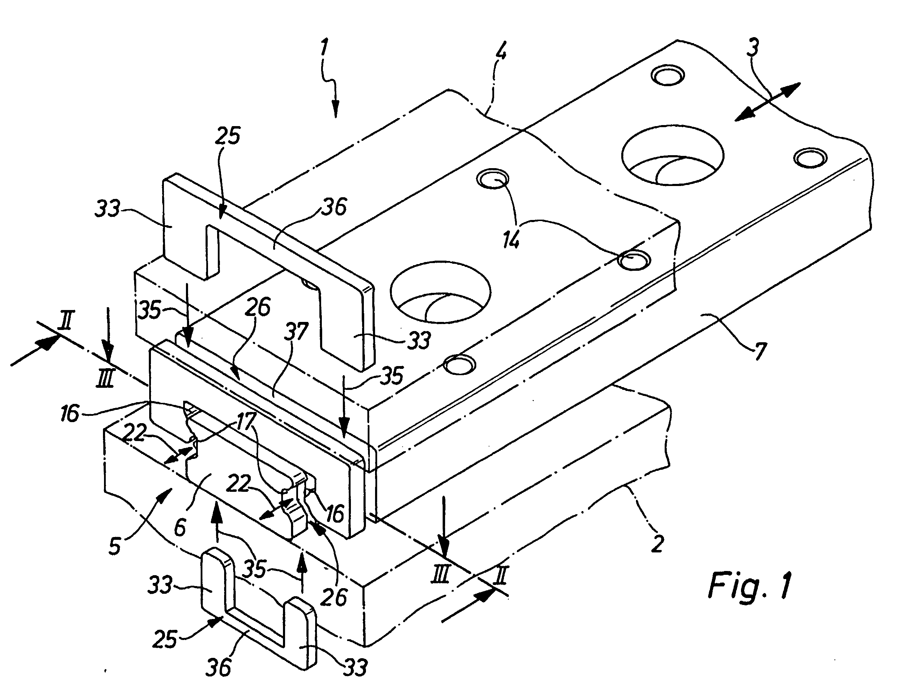

- Fig. 1: einen Ausschnitt aus einer schematisch dargestellten Antriebsvorrichtung, die mit einer bevorzugten Bauform der erfindungsgemäßen Führungseinrichtung ausgestattet ist, wobei die Begrenzungsanschläge der Führungseinrichtung im von den Führungskörpern entfernten Zustand gezeigt sind,
- Fig. 2: die Anordnung aus Fig. 1 im Querschnitt gemäß Schnittlinie II-II aus Fig. 1 und 3,
- Fig. 3: einen Längsschnitt durch die Anordnung gemäß Fig. 1 und 2 gemäß Schnittlinie III-III und
- Fig. 4 und 5: verschiedene Phasen des Zusammenbaus der Anordnung aus Fig. 1 bis 3 zur Verdeutlichung der einzelnen Komponenten.

Aus der Zeichnung geht eine vorzugsweise durch Fluidkraft und hierbei insbesondere pneumatisch betätigbare Antriebsvorrichtung 1 hervor, die über einen strichpunktiert angedeuteten Gehäusekörper 2 und einen diesbezüglich in einer Verschieberichtung 3 linear hin und her verschiebbar geführten Schlittenkörper 4 verfügt.

Der Gehäusekörper 2 enthält nicht näher dargestellte Antriebsmittel, die mit dem Schlittenkörper 4 in der Verschieberichtung 3 bewegungsgekoppelt sind. Eine Verlagerung der Antriebsmittel hat somit eine gleichzeitige Verlagerung des Schlittenkörpers 4 bezüglich des Gehäusekörpers 2 zur Folge.

Die Aktivierung der Antriebsmittel erfolgt beim Ausführungsbeispiel durch Fluidkraft, wenngleich auch eine elektrische Betätigung vorgesehen sein könnte.

Der Schlittenkörper verfügt über nicht näher dargestellte Befestigungsmittel, die ein Fixieren zu bewegender Gegenstände ermöglichen.

Um den Schlittenkörper 4 bei seiner Verschiebebewegung relativ zum Gehäusekörper 2 sicher zu führen und in Querrichtung abzustützen, ist zwischen ihn und den Gehäusekörper 2 die erfindungsgemäße Führungseinrichtung 5 zwischengeschaltet, deren bevorzugter Aufbau nachstehend erläutert wird.

Vorweg sei darauf hingewiesen, dass sich die Beschreibung des Ausführungsbeispiels zwar an einer als Linearführungseinrichtung ausgebildeten Führungseinrichtung orientiert, die erfindungswesentlichen Maßnahmen ohne weiteres aber auch bei Führungseinrichtungen realisierbar sind, bei denen die relativ zueinander zu führenden Körper entlang einer nicht-linearen und insbesondere entlang einer bogenförmigen Wegstrecke bewegt werden. Auch sei betont, dass sich die Führungseinrichtung nicht nur zur Verwendung in Verbindung mit einer Antriebsvorrichtung eignet, sondern für beliebige Führungsaufgaben einsetzbar ist, bei denen zwei beliebige Körper relativ zueinander eine geführte Bewegung ausführen sollen.

Die Führungseinrichtung 5 des Ausführungsbeispiels enthält einen ersten länglichen Führungskörper 6, der schienenartig aufgebaut ist und daher als Führungsschiene bezeichnet werden könnte. Er erstreckt sich in der Verschieberichtung 3 und ist mittels nicht näher gezeigter Befestigungsmittel an dem Gehäusekörper 2 oder einem anderen Körper befestigt. Die Befestigung kann beispielsweise im Rahmen einer Schraubverbindung erfolgen. Bevorzugt besteht der erste Führungskörper 6 aus gehärtetem Stahlmaterial.

Des weiteren verfügt die Führungseinrichtung 5 über einen zweiten Führungskörper 7, der längsseits - beim Ausführungsbeispiel von oben her - an den ersten Führungskörper 6 angesetzt ist. Er verfügt an der dem ersten Führungskörper 6 zugewandten Längsseite, die nachfolgend zur besseren Unterscheidung als Unterseite bezeichnet wird, über eine in Längsrichtung durchgehende Aussparung 8, in die der schmälere erste Führungskörper 6 zumindest partiell längsseits eintaucht. Man könnte sagen, dass der zweite Führungskörper 7 den ersten Führungskörper 6 reiterähnlich an der dem Gehäusekörper 2 entgegengesetzten Längsseite übergreift. Auch der zweite Führungskörper 7 hat längliche Gestalt und besteht vorzugsweise aus gehärtetem Stahlmaterial.

Bedingt durch die breitenmittige Aussparung 8, verfügt der zweite Führungskörper 7 über einen U-förmigen Querschnitt. Der in die Aussparung 8 eingreifende erste Führungskörper 6 wird von den beiden Führungskörperschenkeln 12 an entgegengesetzten Längsseiten flankiert, während der die beiden Führungskörperschenkel 12 verbindende Verbindungsabschnitt 13 des ersten Führungskörpers 6 über den zweiten Führungskörper 7 hinweggreift.

Die den Führungskörperschenkeln 12 entgegengesetzt orientierte Oberseite des zweiten Führungskörpers 7 definiert eine Montagefläche 15, mit der der zweite Führungskörper 7 an die Unterseite des Schlittenkörpers 4 angesetzt ist. Über die Montagefläche 15 verteilte Befestigungsmittel 14, beispielsweise Gewindebohrungen, ermöglichen eine lösbare Verbindung zwischen dem Schlittenkörper 4 und dem zweiten Führungskörper 7. Dabei wird die Montagefläche 15 von dem Schlittenkörper 4 zweckmäßigerweise vollständig überdeckt.

An den einander zugewandten Innenseiten der Führungskörperschenkel 12 des zweiten Führungskörpers 7 sind jeweils zweite Laufbahnmittel 17 vorgesehen, die sich über die gesamte Führungskörperlänge erstrecken. Jeden zweiten Laufbahnmitteln 17 liegen erste Laufbahnmittel 16 mit Abstand gegenüber, die sich an der jeweils zugewandten Längsseite des ersten Führungskörpers 6 befinden. Die Laufbahnmittel 16, 17 können jeweils eine oder mehrere Laufbahnen definieren, die sich parallel zu der Verschieberichtung 3 erstrecken und die beispielsweise in Gestalt nutartiger Vertiefungen am zugeordneten Führungskörper 6, 7 ausgeformt sind. Beim Ausführungsbeispiel enthalten sowohl die ersten als auch die zweiten Laufbahnmittel 16, 17 jeweils zwei rechtwinkelig zur Montagefläche 15 längsseits nebeneinanderliegende Laufbahnen, wobei einander zugewandte Laufbahnen der ersten und zweiten Laufbahnmittel 16, 17 Führungszwischenräume definieren, in die Komponenten jeweils zugeordneter Lagermittel 18 eingreifen.

Die Lagermittel 18 stützen sich quer zur Verschieberichtung 3 gleichzeitig an den mit ihnen kooperierenden ersten und zweiten Laufbahnmitteln 16, 17 ab, wobei sie bezüglich letzteren in Längsrichtung verlagerbar sind. Die dabei von ihnen durchlaufene Bewegungsbahn ist in Fig. 3 durch Doppelpfeil 22 angedeutet.

Die Lagermittel 18 sind beim Ausführungsbeispiel als Wälzlagermittel ausgeführt und enthalten jeweils zwei in Richtung der Bewegungsbahn 22 mit Abstand aufeinanderfolgend angeordnete Reihen kugelförmig ausgebildeter Wälzelemente 23. Innerhalb der einzelnen Lagermittel 18 sind die Wälzelemente 23 mittels eines beispielsweise käfigartigen Haltekörpers 24 in ihrer Relativposition gesichert, allerdings unter Gewährleistung einer freien Drehbarkeit um ihr Zentrum bezüglich des Haltekörpers 24.

Bevorzugt ist die Anordnung so getroffen, dass innerhalb der beiden Lagermittel 18 die Wälzkörper 23 der einen Wälzkörperreihe vorwiegend mit dem ersten Führungskörper 6 und die Wälzkörper 23 der anderen Wälzkörperreihe vorwiegend mit dem zweiten Führungskörper 7 kooperieren. Auf diese Weise wird ein zuverlässiges Abrollen auf den Laufbahnmitteln 16, 17 ohne Verklemmungsgefahr und erhöhte Reibung gewährleistet.

Es versteht sich, dass die ersten und zweiten Laufbahnmittel 16, 17 auch jeweils nur eine einzige Laufbahn definieren können.

Wenn die beiden Führungskörper 6, 7 in der Verschieberichtung 3 relativ zueinander verlagert werden, wandern die Lagermittel 18 entlang den zugeordneten Laufbahnmitteln 16, 17 entlang der Bewegungsbahn 22. Dabei ist zu verhindern, dass die Lagermittel 18 im Bereich der Stirnseiten der Führungskörper 6, 7 aus den Laufbahnmitteln 16, 17 bzw. den von diesen definierten Führungszwischenräumen austreten. Daher enthält die Führungseinrichtung 5 Begrenzungsanschläge 25, die an den Führungskörpern 6, 7 fixiert sind und an der gewünschten Stelle in die Bewegungsbahn 22 der Lagermittel 18 ragen. Somit können die Lagermittel 18 bei Erreichen der entsprechenden Relativposition auf die Begrenzungsanschläge 25 auflaufen und sind an einem stirnseitigen Verlassen der Laufbahnmittel 16, 17 gehindert.

Beim Ausführungsbeispiel sind an jedem Führungskörper 6, 7 zwei in Längsrichtung der Bewegungsbahn 22 mit Abstand zueinander angeordnete Begrenzungsanschläge 25 gehalten. Diese Begrenzungsanschläge 25 befinden sich an den beiden stirnseitigen Endbereichen des jeweiligen Führungskörpers 6, 7, wobei in der Zeichnung nur jeweils einer dieser Endbereiche mit zugeordnetem Begrenzungsanschlag 25 abgebildet ist. An jedem Führungskörper 6, 7 sind somit die an diesem vorgesehenen Laufbahnmittel 16, 17 stirnseitig durch jeweils einen Begrenzungsanschlag 25 begrenzt.

Jeder Begrenzungsanschlag 25 taucht in einen sich quer zur Längsrichtung der Bewegungsbahn 22 der Lagermittel 18 erstreckenden Querschlitz 26 des zugeordneten Führungskörpers 6, 7 ein. Dabei verläuft die Schlitzebene des Querschlitzes 26 vorzugsweise rechtwinkelig zur Längsrichtung der Bewegungsbahn 22.

Die Breite des Begrenzungsanschlages 25 entspricht zweckmäßigerweise durchweg der Schlitzbreite des Querschlitzes 26, so dass jeder Begrenzungsanschlag 25 im montierten Zustand mit den beiden Schlitzflanken 27a, 27b in Kontakt steht. Auf diese Weise sind die Begrenzungsanschläge 25 im jeweils zugeordneten Querschlitz 26 in Richtung der Bewegungsbahn 22 unbewegbar fixiert.

Der größte Teil des Grundrisses eines jeweiligen Begrenzungsanschlages 25 kommt innerhalb des zugeordneten Querschlitzes 26 zu liegen. Vorzugsweise ragen lediglich die mit den Lagermitteln 18 kooperierenden Anschlagpartien 28 der Begrenzungsanschläge 25 aus dem zugeordneten Querschlitz 26 hinaus. Ansonsten sind die Bewegungsanschläge 25 zweckmäßigerweise zumindest im wesentlichen vollständig innerhalb des Querschlitzes 26 untergebracht, so dass sie die Außenabmessungen der Führungseinrichtung 5 nicht vergrößern.

Ein wesentlicher Vorteil der in Querschlitzen 26 der Führungskörper 6, 7 verankerten Begrenzungsanschläge 25 besteht darin, dass die von den Lagermitteln 18 auf sie ausgeübten Beaufschlagungskräfte 32 unmittelbar vom zugeordneten Führungskörper 6, 7 aufgenommen werden. Dieser stützt den betreffenden Begrenzungsanschlag 25 mit der in Richtung der Lagermittel 18 weisenden Schlitzflanke 27a ab, so dass die betreffende Schlitzflanke 27a eine einstückig mit dem zugeordneten Führungskörper 6, 7 ausgebildete Abstützfläche für den zugeordneten Begrenzungsanschlag 25 bildet. Auch wenn nur wenig Einbauraum innerhalb des betreffenden Führungskörpers 6, 7 zur Verfügung steht, kann auf diese Weise eine auch hohen Beanspruchungen standhaltende Halterung der Begrenzungsanschläge 25 bewirkt werden.

Es sind nun lediglich noch Maßnahmen zu treffen, die ein Herausfallen des Begrenzungsanschlages 25 aus dem zugeordneten Querschlitz 26 verhindern. Da die entsprechenden Maßnahmen jedoch ausschließlich Bewegungen des Begrenzungsanschlages 25 in der Schlitzebene und somit rechtwinkelig zur Beaufschlagungskraft 32 verhindern müssen, also in einer Richtung, in der die Lagermittel 18 keine Kraft auf den Begrenzungsanschlag 25 ausüben, können die dazu vorgesehenen Positionssicherungsmaßnahmen sehr einfach gehalten werden. Es reicht praktisch aus, den Begrenzungsanschlag 25 ausschließlich im Presssitz im zugeordneten Querschlitz 26 zu fixieren. Zusätzlich oder alternativ zu einer derartigen kraftschlüssigen Verbindung wäre auch eine formschlüssige oder eine kombiniert kraft- und formschlüssige Verbindung möglich, beispielsweise eine Rastverbindung. Des weiteren könnte der Begrenzungsanschlag 25 in den Querschlitz 26 eingeklebt oder durch eine andere stoffschlüssige Verbindung fixiert werden.

Wie schon erwähnt, verfügen beim Ausführungsbeispiel die beiden Führungskörper 6, 7 über zum einen zwei erste Laufbahnmittel 16 und zum anderen zwei zweite Laufbahnmittel 17, die am jeweiligen Führungskörper parallel und mit Abstand zueinander angeordnet sind. Zwischen jedem einander zugewandten Paar erster und zweiter Laufbahnmittel 16, 17 befinden sich Lagermittel 18 der geschilderten Art. Dabei ist jeder Begrenzungsanschlag 25 derart ausgebildet, dass er auf gleicher axialer Höhe des zugeordneten Führungskörpers 6, 7 gleichzeitig in die Bewegungsbahn 22 beider Lagermittel 18 ragt. Im Vergleich zu einer Bauform, bei der den einzelnen Laufbahnmitteln jeweils gesonderte Begrenzungsanschläge zugeordnet sind, hat dies eine vereinfachte Herstellung und Montage zur Folge.

Um dies zu realisieren, ist ein jeweiliger Querschlitz 26 so ausgebildet, dass er randseitig zumindest zu den beiden Laufbahnmitteln 16, 17 des jeweiligen Führungskörpers 6, 7 hin offen ist. Durch diese Öffnungen hindurch können die Anschlagpartien 28 des eingesetzten Begrenzungsanschlages 25 aus dem Querschlitz 26 hinausragen und dabei so über die von den Laufbahnmitteln 16, 17 definierten Laufbahnen vorstehen, dass sie in die Bewegungsbahn 22 der zugeordneten Lagermittel 18 ragen.

Eine besonders vorteilhafte Gestaltung der Begrenzungsanschläge 25 geht aus den Zeichnungen hervor. Demnach hat jeder Begrenzungsanschlag 25 eine bügelartige Formgebung und ist dabei vorzugsweise U-förmig gestaltet. An jedem der beiden Bügelschenkel 33 ist dabei eine der Anschlagpartien 28 vorgesehen. Diese befinden sich in Verbindung mit dem im Querschnitt etwa rechteckförmig ausgebildeten ersten Führungskörper 6 am äußeren Randbereich der Bügelschenkel 33 und in Verbindung mit dem im Querschnitt ebenfalls U-förmig ausgebildeten zweiten Führungskörper 7 an den einander zugewandten inneren Randbereichen der Bügelschenkel 33.

Betrachtet man die Querschlitze 26 in einem Schnitt mit entlang der Schlitzebene verlaufender Schnittebene, so haben diese zweckmäßigerweise ebenfalls eine U-förmige Gestalt. Diese entspricht zweckmäßigerweise hinsichtlich des Umrisses im wesentlichen derjenigen des zugeordneten Begrenzungsanschlages 25.

Die Querschlitze 26 sind so in die zugeordneten Führungskörper 6, 7 eingebracht, dass lediglich noch ein als Zentralabschnitt 34 bezeichneter Verbindungsabschnitt geringen Querschnittes verbleibt, der die die beiden Schlitzflanken 27a, 27b aufweisenden beiden Führungskörperabschnitte miteinander verbindet. Bei montiertem Begrenzungsanschlag 25 sitzt der Zentralabschnitt 34 zwischen den Bügelschenkeln 33, wobei vorgesehen ist, dass die Begrenzungsanschläge 25 in einer durch Pfeile angedeuteten Montagerichtung 35 mit ihren Bügelschenkeln 33 voraus in den zugeordneten Querschlitz 26 eingesetzt werden. Dabei bewirkt der Zentralabschnitt 34 eine Begrenzung der Einstecktiefe des zugeordneten Begrenzungsanschlages 25, indem dieser so weit in den Querschlitz 26 eingeführt werden kann, bis sein die beiden Bügelschenkel 33 verbindender Stegabschnitt 36 an dem Zentralabschnitt 34 zur Anlage gelangt.

Die Einsteckmontage der Begrenzungsanschläge 25 erfolgt also vorzugsweise durch denjenigen randseitigen Öffnungsabschnitt 37 des Querschlitzes 26 hindurch, der im Falle des zweiten Führungskörpers 7 zur Montagefläche 15 und im Falle des ersten Führungskörpers 6 zu der auf dem Gehäusekörper 2 sitzenden Montagefläche 19 des betreffenden Führungskörpers ausmündet.

Um den Begrenzungsanschlag 25 im Querschlitz 26 zu fixieren, genügt es somit, ihn an einem Austritt entgegen der Montagerichtung 35 zu hindern. Quer zur Montagerichtung 35 ist der Begrenzungsanschlag 25 durch den in ihn eingreifenden Zentralabschnitt 34 fixiert. Zur Sicherung der Position des Bügelschenkels 33 können die oben erwähnten Maßnahmen getroffen werden, wobei sich in Verbindung mit der geschilderten Bauform der Begrenzungsanschläge 25 eine Klemmbefestigung empfiehlt.

Die Klemmbefestigung kann beispielsweise dadurch erreicht werden, dass man einen federelastischen Begrenzungsanschlag 25 verwendet, der derart in der Schlitzebene federnd nachgiebig ausgebildet ist, dass sich die Bügelschenkel 33 relativ zueinander verschwenken lassen. Der lichte Abstand zwischen den Bügelschenkeln 33 kann nun so auf die entsprechend gemessene Breite des Zentralabschnittes 34 abgestimmt werden, dass der Bügelschenkel 33 den Zentralabschnitt 34 im montierten Zustand unter Vorspannung übergreift. Es bietet sich in diesem Falle an, den Bügelschenkel 33 aus Federstahl herzustellen.

Indem die Montageöffnung für den Bügelschenkel 33 an den Montageflächen 15, 19 vorgesehen wird, kann auch bereits durch die an den Montageflächen montierten Körper eine Verliersicherung bewirkt werden, indem diese die Montagefläche überragen.

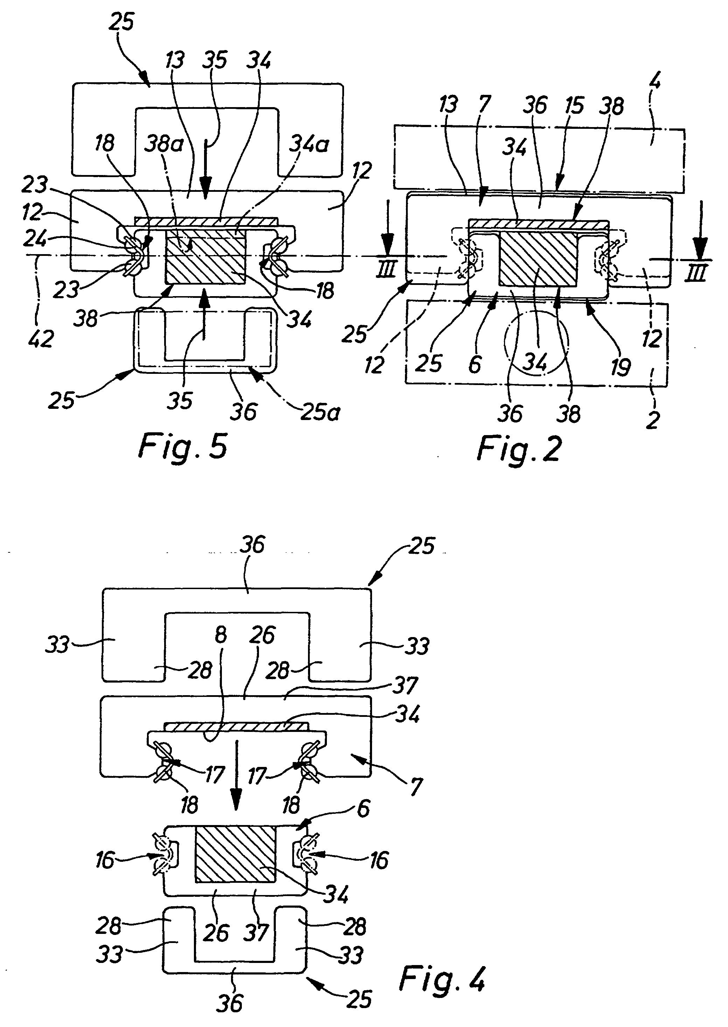

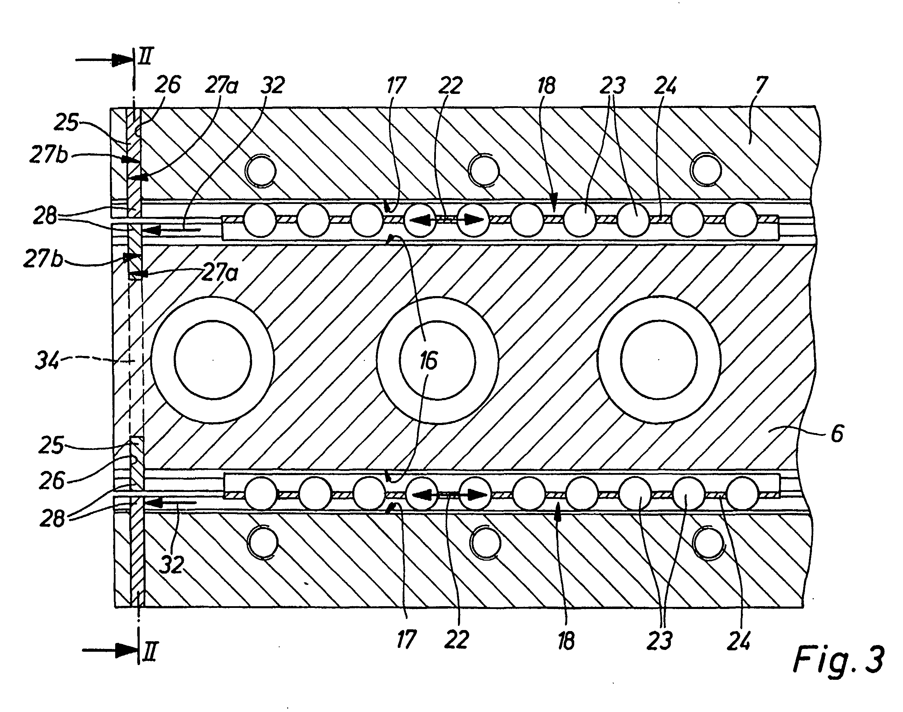

Bei den gezeigten Ausführungsbeispielen ist der Zentralabschnitt 34 so ausgebildet und angeordnet, dass seine zur Begrenzung der Einstecktiefe mit dem Stegabschnitt 36 zusammenwirkende Anschlagfläche 38 entgegen der Montagerichtung 35 mit Abstand zu der die Laufbahnmittel des zugeordneten Führungskörpers enthaltenden Führungsebene 42 angeordnet ist. In Fig. 5 ist anhand des ersten Führungskörpers 6 strichpunktiert eine alternative Bauform angedeutet, bei der der Zentralabschnitt 34a derart ausgebildet und angeordnet ist, dass seine Anschlagfläche 38a der Führungsebene 42 in der Montagerichtung 35 mit Abstand nachgeordnet ist. Die Führungsebene 42 liegt also näher zur Montageöffnung 19 als die Anschlagfläche 38a. In einem solchen Falle kann als Begrenzungsanschlag 25a ein einfacher plattenartiger Körper mit vorzugsweise rechteckförmigem Umriss verwendet werden. Eine solche Bauform ist allerdings weniger günstig als die oben erläuterte, da in der Regel zusätzliche Sicherungsmaßnahmen erforderlich sind, um den Begrenzungsanschlag 25a auch quer zur Montagerichtung 35 am zugeordneten Führungskörper zu fixieren.

Nachzutragen ist noch, dass in Verbindung mit einer Antriebsvorrichtung ein oder beide Führungskörper 6, 7 unmittelbar den zugeordneten Gehäusekörper 2 bzw. Schlittenkörper 4 bilden können. Es könnten dann beispielsweise im ersten Führungskörper 6 Antriebsmittel der Antriebsvorrichtung untergebracht sein, und die Befestigung zu bewegender Bauteile könnte direkt am zweiten Führungskörper 7, insbesondere an dessen Montagefläche 15, erfolgen.

## Patentansprüche

1. Führungseinrichtung, mit mindestens einem Führungskörper (6, 7), der mindestens eine Laufbahn für relativ zum Führungskörper (6, 7) bewegbare Lagermittel (18) definierende Laufbahnmittel (16, 17) aufweist und an dem mindestens ein in die Bewegungsbahn der Lagermittel (18) ragender Begrenzungsanschlag (25, 25a) angeordnet ist, **dadurch gekennzeichnet, dass** der Begrenzungsanschlag (25, 25a) in einen sich in der Bewegungsbahn (22) der Lagermittel (18) quer zu der Längsrichtung der Bewegungsbahn (22) erstreckenden Querschlitz (26) des Führungskörpers (6, 7) eintaucht, wobei die in Richtung der Lagermittel (18) weisende Schlitzflanke (27a) als Abstützfläche für den in die Bewegungsbahn (22) der Lagermittel (18) ragenden Abschnitt des Begrenzungsanschlags (25, 25a) dient.

2. Führungseinrichtung nach Anspruch 1, **dadurch gekennzeichnet, dass** die Schlitzebene des Querschlitzes (26) rechtwinkelig zur Längsrichtung der Bewegungsbahn (22) der Lagermittel (18) verläuft.

3. Führungseinrichtung nach Anspruch 1 oder 2, **dadurch gekennzeichnet, dass** der Begrenzungsanschlag (25, 25a) mit Ausnahme des den Laufbahnmitteln (16, 17) zugeordneten Abschnittes (28) zumindest im wesentlichen vollständig innerhalb des Querschlitzes (26) angeordnet ist.

4. Führungseinrichtung nach einem der Ansprüche 1 bis 3, **dadurch gekennzeichnet, dass** der Begrenzungsanschlag (25, 25a) durchweg eine Breite aufweist, die der Schlitzbreite des Querschlitzes (26) entspricht.

5. Führungseinrichtung nach einem der Ansprüche 1 bis 4, **gekennzeichnet durch** eine Ausgestaltung als Linearführungseinrichtung, bei der die Laufbahnmittel (16, 17) eine sich linear erstreckende Bewegungsbahn (22) für die Lagermittel (18) definieren.

6. Führungseinrichtung nach einem der Ansprüche 1 bis 5, **dadurch gekennzeichnet, dass** der Führungskörper (6, 7) schienenartig ausgebildet ist.

7. Führungseinrichtung nach einem der Ansprüche 1 bis 6, **dadurch gekennzeichnet, dass** die Lagermittel (18) eine Mehrzahl von an den Laufbahnmitteln (16, 17) ablaufenden und vorzugsweise kugelförmigen Wälzelementen (23) enthalten, die zweckmäßigerweise in einem zum Beispiel käfigartigen Haltekörper (24) fixiert sind.

8. Führungseinrichtung nach einem der Ansprüche 1 bis 7, **dadurch gekennzeichnet, dass** der Begrenzungsanschlag (25, 25a) im Rahmen einer kraftschlüssigen und/oder formschlüssigen und/oder stoffschlüssigen Verbindung ohne zusätzliche Befestigungsmittel direkt am Führungskörper (6, 7) gehalten ist, beispielsweise durch Verklemmen, Verrasten oder Verkleben.

9. Führungseinrichtung nach einem der Ansprüche 1 bis 8, **dadurch gekennzeichnet, dass** der Begrenzungsanschlag (25) federnd ausgebildet ist und insbesondere aus Federstahl besteht.

10. Führungseinrichtung nach einem der Ansprüche 1 bis 9, **dadurch gekennzeichnet, dass** die Laufbahnmittel (16, 17) wenigstens zwei mit geringem Abstand längsseits nebeneinander verlaufende Laufbahnen enthalten.

11. Führungseinrichtung nach einem der Ansprüche 1 bis 10, **dadurch gekennzeichnet, dass** an dem Führungskörper (6, 7) zwei zueinander parallele und mit Abstand zueinander verlaufende Laufbahnmittel (16, 17) mit zugeordneten Lagermitteln (18) vorgesehen sind, wobei der Führungskörper (6, 7) einen zu seinen beiden Laufbahnmitteln (16, 17) hin offenen Querschlitz (26) aufweist, in dem ein gleichzeitig in die Bewegungsbahn (22) beider Lagermittel (18) ragender Begrenzungsanschlag einsitzt.

12. Führungseinrichtung nach Anspruch 11, **dadurch gekennzeichnet, dass** der Begrenzungsanschlag (25a) plattenartig gestaltet ist und vorzugsweise einen rechteckförmigen Umriss hat.

13. Führungseinrichtung nach Anspruch 11, **dadurch gekennzeichnet, dass** der Begrenzungsanschlag (25) bügelartig mit vorzugsweise U-förmiger Gestalt ausgestaltet ist, wobei die Bügelschenkel (33) in jeweils eine der beiden Bewegungsbahnen (22) ragen.

14. Führungseinrichtung nach einem der Ansprüche 1 bis 13, **dadurch gekennzeichnet, dass** der Querschlitz, bei einem Schnitt entlang der Schlitzebene betrachtet, etwa U-förmig gestaltet ist.

15. Führungseinrichtung nach einem der Ansprüche 11 bis 14, **dadurch gekennzeichnet, dass** der Führungskörper (6, 7) im Bereich des Querschlitzes (26) einen die Schlitzbreite überbrückenden Zentralabschnitt (34, 34a) aufweist, der die Einstecktiefe des Begrenzungsanschlages (25, 25a) begrenzt.

16. Führungseinrichtung nach einem der Ansprüche 11 bis 15, **dadurch gekennzeichnet, dass** die beiden Laufbahnmittel (16, 17) des jeweiligen Führungskörpers (6, 7) an einander zugewandten oder an voneinander wegweisenden Längsseiten des betreffenden Führungskörpers (6, 7) vorgesehen sind.

17. Führungseinrichtung nach einem der Ansprüche 1 bis 16, **dadurch gekennzeichnet, dass** diejenige randseitige Öffnung des Querschlitzes (26), durch die hindurch die Einsteckmontage des zugeordneten Begrenzungsanschlages (25, 25a) erfolgt, an einer zum Anbringen mindestens eines Körpers (2, 4) dienenden Montagefläche (15, 19) des betreffenden Führungskörpers (6, 7) vorgesehen ist.

18. Führungseinrichtung nach einem der Ansprüche 1 bis 17, **dadurch gekennzeichnet, dass** den Laufbahnmitteln (16, 17) an zwei in Längsrichtung der definierten Bewegungsbahn (22) beabstandeten Stellen jeweils ein in einen Querschlitz (26) eintauchender Begrenzungsanschlag (25, 25a) zugeordnet ist.

19. Führungseinrichtung nach einem der Ansprüche 1 bis 18, **gekennzeichnet durch** wenigstens zwei Führungskörper (6, 7), die über einander zugeordnete Laufbahnmittel (16, 17) verfügen, die paarweise einen Zwischenraum definieren, in dem sich gleichzeitig mit beiden Führungskörpern (6, 7) zusammenarbeitende Lagermittel (18) befinden.

20. Führungseinrichtung nach Anspruch 19, **dadurch gekennzeichnet, dass** ein Führungskörper über eine Aussparung (8) verfügt, in die der andere Führungskörper zumindest partiell längsseits eintaucht, wobei sich die Laufbahnmittel (16, 17) in dem Bereich zwischen den Flanken der Aussparung des einen Führungskörpers (7) und den diesem zugewandten Längsseiten des anderen Führungskörpers (6) befinden.

21. Führungseinrichtung nach einem der Ansprüche 1 bis 20 als Bestandteil einer elektrisch und/oder durch Fluidkraft aktivierbaren Antriebsvorrichtung (1).

## Claims

1. Guide device with at least one guide body (6, 7) having one or more tracks for bearing means (18) defining track means (16, 17) movable relative to the guide body (6, 7) and on which is mounted at least one limit stop (25, 25a) extending into the path of movement of the bearing means (18), **characterised in that** the limit stop (25, 25a) dips into a transverse slot (26) of the guide body (6, 7) extending in the path of movement (22) of the bearing means (18) at right-angles to the longitudinal direction of the path of movement (22), wherein the slot flank (27a) facing in the direction of the bearing means (18) serves as support surface for the section of the limit stop (25, 25a) extending into the path of movement (22) of the bearing means (18).

2. Guide device according to claim 1, **characterised in that** the slot plane of the transverse slot (26) runs at right-angles to the longitudinal direction of the path of movement (22) of the bearing means (18).

3. Guide device according to claim 1 or 2, **characterised in that**, with the exception of the section (28) assigned to the track means (16, 17), the limit stop (25, 25a) is fitted at least substantially completely within the transverse slot (26).

4. Guide device according to any of claims 1 to 3, **characterised in that** the limit stop (25, 25a) has a continuous width corresponding to the slot width of the transverse slot (26).

5. Guide device according to any of claims 1 to 4, **characterised by** a design as a linear guidance device in which the track means (16, 17) define a linear path of movement (22) for the bearing means (18).

6. Guide device according to any of claims 1 to 5, **characterised in that** the guide body (6, 7) is rail-like in form.

7. Guide device according to any of claims 1 to 6, **characterised in that** the bearing means (18) contain a multiplicity of preferably spherical roller elements (23) running on the track means (16, 17), and expediently fixed in a retaining body (24) which is for example cage-like.

8. Guide device according to any of claims 1 to 7, **characterised in that** the limit stop (25, 25a) is held directly to the guide body (6, 7) by a non-positive and/or positive and/or adhesive connection without additional fastening means, for example through clamping, snap-in engagement or gluing.

9. Guide device according to any of claims 1 to 8, **characterised in that** the limit stop (25) is sprung and in particular made from spring steel.

10. Guide device according to any of claims 1 to 9, **characterised in that** the track means (16, 17) contain at least two tracks running alongside one another with only a small distance between them.

11. Guide device according to any of claims 1 to 10, **characterised in that** there are provided on the guide body (6, 7) two track means (16, 17) with assigned bearing means (18), running parallel to and at a distance from one another, wherein the guide body (6, 7) has a transverse slot (26) open towards its two track means (16, 17), and in which there rests a limit stop simultaneously extending into the path of movement (22) of both bearing means (18).

12. Guide device according to claim 11, **characterised in that** the limit stop (25a) is plate-shaped and has preferably a rectangular outline.

13. Guide device according to claim 11, **characterised in that** the limit stop (25) is bracket-shaped with a preferably U-shaped design, wherein each of the bracket arms (33) extends into one of the two paths of movement (22).

14. Guide device according to any of claims 1 to 13, **characterised in that** the transverse slot, viewed in a section along the slot plane, is broadly U-shaped.

15. Guide device according to any of claims 11 to 14 **characterised in that**, in the area of the transverse slot (26), the guide body (6, 7) has a central section (34, 34a) bridging the slot width, which defines the depth of insertion of the limit stop (25, 25a).

16. Guide device according to any of claims 11 to 15, **characterised in that** the two track means (16, 17) of each guide body (6, 7) are provided on side walls of the guide body (6, 7) concerned which face towards or away from one another.

17. Guide device according to any of claims 1 to 16, **characterised in that** the edge opening of the transverse slot (26) through which insertion of the assigned limit stop (25, 25a) is effected is provided on a mounting surface (15, 19) of the guide body (6, 7) concerned which serves for the attachment of one or more bodies (2, 4).

18. Guide device according to any of claims 1 to 17, **characterised in that** each of the track means (16, 17) is assigned, at two points spaced apart in the longitudinal direction of the defined path of movement (22), a limit stop (25, 25a) which dips into a transverse slot (26).

19. Guide device according to any of claims 1 to 18, **characterised by** at least two guide bodies (6, 7) with assigned track means (16, 17) defining in pairs an intermediate space in which bearing means (18) simultaneously cooperating with both guide bodies (6, 7) are located.

20. Guide device according to claim 19, **characterised in that** one guide body has a recess (8) into which the other guide body dips at least partly on the long side, while the track means (16, 17) are located in the area between the sides of the recess of the one guide body (7) and the side walls of the other guide body (6) facing the former guide body.

21. Guide device according to any of claims 1 to 20 as part of a drive unit (1) which may be actuated electrically and/or by fluid power.

## Revendications

1. Dispositif de guidage avec au moins un corps de guidage (6, 7) qui comporte au moins une voie de roulement pour des moyens de voie de roulement (16, 17) définissant des moyens de palier (18) déplaçables par rapport au corps de guidage (6, 7), et sur lequel est disposée au moins une butée de limitation (25, 25a) pénétrant dans la voie de déplacement des moyens de palier (18), **caractérisé en ce que** la butée de limitation (25, 25a) pénètre dans une fente transversale (26) du corps de guidage (6, 7), s'étendant dans la voie de déplacement (22) des moyens de palier (18), transversalement à la direction longitudinale de la voie de déplacement (22), le flanc de la fente (27a), orienté en direction des moyens de palier (18), servant de surface d'appui pour la portion de la butée de limitation (25, 25a), pénétrant dans la voie de déplacement (22) des moyens de palier (18).

2. Dispositif de guidage selon la revendication 1, **caractérisé en ce que** le plan de la fente transversale (26) s'étend perpendiculairement à la direction longitudinale de la voie de déplacement (22) des moyens de palier (18).

3. Dispositif de guidage selon la revendication 1 ou 2, **caractérisé en ce que** la butée de limitation (25, 25a) est disposée sensiblement entièrement à l'intérieur de la fente transversale (26), à l'exception de la portion (28) associée aux moyens de voie de roulement (16, 17).

4. Dispositif de guidage selon l'une des revendications 1 à 3, **caractérisé en ce que** la butée de limitation (25, 25a) présente d'un bout à l'autre une largeur qui correspond à la largeur de la fente transversale (26).

5. Dispositif de guidage selon l'une des revendications 1 à 4, **caractérisé par** une forme de réalisation en tant que dispositif de guidage linéaire dans laquelle les moyens de voie de roulement (16, 17) définissent une voie de déplacement (22) s'étendant linéairement pour les moyens de palier (18).

6. Dispositif de guidage selon l'une des revendications 1 à 5, **caractérisé en ce que** le corps de guidage (6, 7) est réalisé à la manière d'un rail.

7. Dispositif de guidage selon l'une des revendications 1 à 6, **caractérisé en ce que** les moyens de palier (18) contiennent une pluralité d'éléments de roulement (23) roulant sur les moyens de voie de roulement (16, 17) et de préférence de forme sphérique qui sont avantageusement fixés dans un corps de retenue (24) par exemple de type cage.

8. Dispositif de guidage selon l'une des revendications 1 à 7, **caractérisé en ce que** la butée de limitation (25, 25a) est maintenue, dans le cadre d'une liaison à force et/ou par complémentarité de formes et/ou par adhérence de matière, directement sur le corps de guidage (6, 7), sans moyen de fixation supplémentaire, par exemple par serrage, encliquetage ou collage.

9. Dispositif de guidage selon l'une des revendications 1 à 8, **caractérisé en ce que** la butée de limitation (25) est réalisée élastique et en particulier en acier à ressort.

10. Dispositif de guidage selon l'une des revendications 1 à 9, **caractérisé en ce que** les moyens de voie de roulement (16, 17) contiennent au moins deux voies de roulement s'étendant côte à côte longitudinalement, à faible distance.

11. Dispositif de guidage selon l'une des revendications 1 à 10, **caractérisé en ce que** sur le corps de guidage (6, 7) sont prévus deux moyens de voie de roulement (16, 17), s'étendant parallèlement l'un à l'autre et à distance l'un de l'autre, avec des moyens de palier (18) associés, le corps de guidage (6, 7) comportant une fente transversale (26) ouverte vers les deux moyens de voie de roulement (16, 17), dans laquelle se trouve une butée de limitation pénétrant en même temps dans la voie de déplacement (22) des deux moyens de palier (18).

12. Dispositif de guidage selon la revendication 11, **caractérisé en ce que** la butée de limitation (25a) est en forme de plaque et présente de préférence un contour rectangulaire.

13. Dispositif de guidage selon la revendication 11, **caractérisé en ce que** la butée de limitation (25) est de type étrier avec une forme de préférence en U, les branches (13) de l'étrier pénétrant chacune dans l'une des deux voies de déplacement 22.

14. Dispositif de guidage selon l'une des revendications 1 à 13, **caractérisé en ce que** la fente transversale vue en coupe le long de la fente, présente approximativement la forme d'un U.

15. Dispositif de guidage selon l'une des revendications 11 à 14, **caractérisé en ce que** dans la zone de la fente transversale (26), le corps de guidage (6, 7) comporte une portion centrale (34, 34a) franchissant la largeur de la fente et qui limite la profondeur d'enfoncement de la butée de limitation (25, 25a).

16. Dispositif de guidage selon l'une des revendications 11 à 15, **caractérisé en ce que** les deux moyens de voie de roulement (16, 17) du corps de guidage (6, 7) respectif sont prévus sur des côtés longitudinaux tournés l'un vers l'autre ou à l'opposé l'un de l'autre du corps de guidage (6, 7) concerné.

17. Dispositif de guidage selon l'une des revendications 1 à 16, **caractérisé en ce que** l'ouverture côté bordure de la fente transversale (26), à travers laquelle s'effectue le montage par enfichage de la butée de limitation (25, 25a) associée, est prévue sur une surface de montage (15, 19), servant à la fixation d'au moins un corps (2, 4), du corps de guidage (6, 7) concerné.

18. Dispositif de guidage selon l'une des revendications 1 à 17, **caractérisé en ce qu'**une butée de limitation (25, 25a), pénétrant dans une fente transversale (26), est associée aux moyens de voie de roulement (16, 17), respectivement en deux points espacés dans la direction longitudinale de la voie de déplacement (22) définie.

19. Dispositif de guidage selon l'une des revendications 1 à 18, **caractérisé par** au moins deux corps de guidage (6, 7) qui disposent de moyens de voie de roulement (16, 17) associés l'un à l'autre, qui définissent deux par deux un interstice dans lequel se trouvent des moyens de palier (18) coopérant en même temps avec les deux corps de guidage (6, 7).

20. Dispositif de guidage selon la revendication 19, **caractérisé en ce qu'**un corps de guidage présente une découpe (8) dans laquelle l'autre corps de guidage pénètre longitudinalement au moins en partie, les moyens de voie de roulement (16, 17) se trouvant dans la zone comprise entre les flancs de la découpe d'un corps de guidage (7) et les côtés longitudinaux tournés vers celui-ci de l'autre corps de guidage (6).

21. Dispositif de guidage selon l'une des revendications 1 à 20, faisant partie intégrante d'un dispositif d'entraînement (1) pouvant être activé électriquement et/ou par la force d'un fluide.
